Europäisches Patentamt

European Patent Office

Office européen des brevets

(19)

(11) Numéro de publication: **0 265 298 B1**

(12) **FASCICULE DE BREVET EUROPEEN**

(45) Date de publication de fascicule du brevet:
03.04.91

(51) Int. Cl.⁵: **D21H 27/02**, D21H 27/30, B32B 29/00, A47K 10/16, B44F 3/00, B31F 1/07

(21) Numéro de dépôt: 87402016.7

(22) Date de dépôt: 10.09.87

(54) Feuille stratifiée absorbante et procédé pour fabriquer une telle feuille.

(30) Priorité: 02.10.86 FR 8613769

(43) Date de publication de la demande:
27.04.88 Bulletin 88/17

(45) Mention de la délivrance du brevet:
03.04.91 Bulletin 91/14

(84) Etats contractants désignés:
AT BE CH DE ES FR GB GR IT LI LU NL SE

(56) Documents cités:
FR-A- 2 537 920
US-A- 3 414 459
US-A- 4 376 671

(73) Titulaire: KAYSERSBERG SA
Route de Lapoutroie
F-68240 Kaysersberg(FR)

(72) Inventeur: Pigneul, Raymond
2, rue des Vosges
F-68320 Durrenentzen(FR)
Inventeur: Ruppel, Rémy
7, rue des Sorbiers
F-68000 Horbourg(FR)
Inventeur: Laurent, Pierre
19, route du Rhin
F-68320 Kunheim(FR)

(74) Mandataire: David, Daniel
KAYSERSBERG Service Propriété Industrielle 54, avenue Hoche
F-75008 Paris(FR)

## Description

La présente invention se rapporte à une feuille stratifiée absorbante composée d'au moins deux plis gaufrés, constitués essentiellement de fibres cellulosiques, ouate de cellulose notamment. Ce type de produit trouve, en particulier, une application dans le domaine du papier à usages domestiques et sanitaires après avoir été transformé en serviettes, essuie-tout, papier hygiénique ou autres articles similaires.

Dans ce domaine, des efforts on été faits pour proposer des produits présentant à la fois des qualités de douceur, de volume et d'absorption. On cherche en particulier à améliorer la qualité de bouffant car l'utilisateur l'associe à la douceur et à la souplesse.

En outre, le bouffant permet d'améliorer la présentation du produit quand il est transformé en rouleaux notamment, car pour un même nombre de feuilles, on obtient un rouleau de plus grand diamètre, au toucher moelleux.

Un mode de fabrication, bien connu, de feuilles stratifiées à au moins deux épaisseurs, consiste à gaufrer séparément chacun des deux plis entre un cylindre à revêtement en caoutchouc et un cylindre métallique pourvu d'éléments en saillie, gravés ou rapportés, en surface. Après l'opération de gaufrage, on dépose une substance adhésive au moyen d'un rouleau applicateur sur les parties en saillie de l'un ou des deux plis, puis on associe les deux plis entre eux par leurs éléments en saillie en les faisant passer dans l'intervalle de pincement formé par les deux rouleaux métalliques de gaufrage qui roulent l'un sur l'autre. Les rouleaux sont entraînés en rotation en synchronisme de manière que les éléments en saillie se rejoignent au moins partiellement et assurent la liaison des plis. Un tel procédé, suivi éventuellement d'un calandrage de la feuille stratifiée est décrit dans le brevet US-A-3414459. Selon ce brevet les éléments en saillie sont des protubérances de faible section transversale réparties uniformément à la surface des plis. Leur nombre est relativement élevé. On y mentionne par exemple qu'il est préférable de gaufrer les plis à raison de 16 protubérances par cm$^2$.

Le brevet US-A-4376671 concerne également une structure stratifiée constituée d'un nombre pair de plis associés par leurs motifs de gaufrage. On distingue un premier motif de gaufrage à espacement assez large et un second motif constitué de protubérances à espacement réduit, de hauteur plus faible, entourant les premiers. Les parties gaufrées de chacun des plis étant mises en regard les unes des autres, la liaison n'est assurée que par l'intermédiaire des premiers motifs. On obtient un produit bouffant dont la souplesse est améliorée où les protubérances charpentent le papier entre les motifs espacés, sans toutefois trop le rigidifier.

Le brevet US-A-4326002 décrit une structure stratifiée composée de deux plis gaufrés dont les protubérances faisant saillie vers l'intérieur de la feuille sont, soit emboîtées - le sommet des protubérances d'une feuille étant en contact avec la feuille opposée entre deux protubérances - soit disposées pointes contre pointes. Ces protubérances sont, comme dans les brevets précédents, relativement rapprochées les unes des autres. La structure comporte un motif de gaufrage supplémentaire à espacement plus large que le précédent. Ce second motif est réalisé à travers la feuille elle-même et non sur chacun des plis comme dans le brevet US-A-4376671. L'objectif est également d'améliorer à la fois l'esthétique du complexe et les qualités de douceur, d'absorption et de volume.

Le brevet FR-A-2537920 décrit une feuille de papier à plusieurs plis, présentant un motif obtenu par gaufrage de la feuille entre deux cylindres métalliques. Ces derniers comportent des éléments en saillie et des éléments en creux séparés par un plan neutre. Le gaufrage est réalisé par engrenage des s aillies d'un cylindre dans les creux de l'autre. On note que l'ensemble de ces zones gaufrées reproduit un motif de fleur dessiné de la sorte point par point.

Les produits conformes à ces brevets présentent tous des éléments en saillie relativement rapprochés les uns des autres. Cette exigence semble commandée par la nécessité de charpenter suffisamment le complexe pour que les plis restent espacés et ne s'écrasent pas l'un contre l'autre.

Dans les brevets US-A-4376667l et US-A-4326002 le motif supplémentaire à large espacement a essentiellement un objectif esthétique. Malheureusement le gaufrage réalisé suivant des points rapprochés fragilise le papier ; le complexe présente en conséquence des valeurs de résistance à la traction inférieures aux valeurs considérées comme normales pour ce type de produit, notamment en ce qui concerne le papier hygiénique pour lequel on utilise de la ouate de cellulose de faible grammage de l'ordre de 15 à 17 g/m$^2$. Si, pour remédier à ce défaut, on augmente la quantité de colle déposée, on nuit alors à la douceur et on rigidifie le produit.

Il a été trouvé maintenant, conformément à l'invention, que l'on pouvait obtenir une feuille stratifiée présentant un volume, ou bouffant, satisfaisant, sans nuire aux qualités intrinsèques de douceur de chacun des plis le composant.

Ainsi, selon l'invention une feuille stratifiée, absorbante, composée d'au moins deux plis gaufrés constitués essentiellement de fibres cellulosiques, de grammage compris entre 14 et 25 g/m$^2$, liés entre eux au moins partiellement par des éléments faisant saillie par rapport au plan desdits plis vers l'extérieur de la feuille, comportant un sens machine, est caractérisée en ce que les éléments en saillie sont disposés essentiellement selon des traits continus ou des combinaisons de traits continus, de largeur comprise entre 0,5 et 1 mm, de façon à dessiner le contour de motifs linéaires répartis uniformément le long de deux directions inclinées par rapport au sens machine, chacun des motifs couvrant une surface comprise entre 2 et 4 cm². 40 à 60 % de ladite surface étant gaufrée, et le nombre de motifs étant choisi de façon que la surface totale gaufrée couvre de 5 à 20 % de la surface de la feuille.

Ainsi le produit se caractérise par l'absence, ou l'absence quasi totale, de protubérances de faible section sur les plis, contrairement à l'art antérieur. On obtient de façon surprenante une structure présentant un bouffant satisfaisant et suffisant pour autoriser la transformation en rouleaux ou en paquets de feuilles enchevêtrées avec un volume comparable aux autres structures stratifiées liées pointes contre pointes et gaufrées selon une densité élevée de protubérances, sans en présenter les inconvénients résultant de l'affaiblissement de la résistance mécanique. En outre on réalise un optimum entre le caractère bouffant et la rigidification due aux surfaces de liaison entre les plis.

Le motif répété représenté par le gaufrage peut être celui d'une figure géométrique, d'un fleur stylisée ou tout autre dessin présentant un caractère esthétique.

Selon une caractéristique supplémentaire de l'invention, la liaison est assurée par un dépôt de colle sur les surfaces gaufrées inférieur à 1 g/m², de préférence de l'ordre de 0,015 g/m². Ce faible dépôt contribue à garantir une douceur optimale au produit par rapport aux plis pris individuellement.

On va décrire maintenant l'invention plus en détail en se référant aux dessins annexés dans lesquels :

La figure 1 représente schématiquement une installation de gaufrage et de liage permettant la réalisation de feuilles stratifiées conformes à l'invention.

La figure 2 représente une vue en plan d'une feuille conforme à l'invention obtenue avec l'installation de la figure 1.

La figure 3 est une vue en coupe agrandie de la feuille de la figure 2 selon AA.

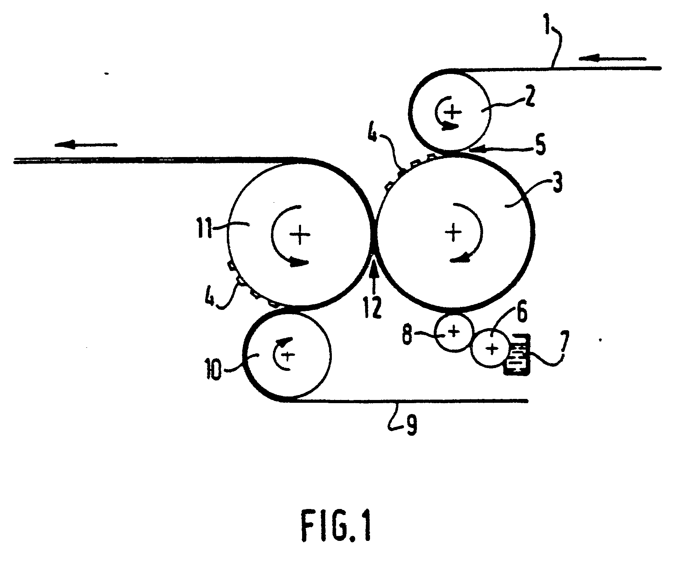

L'installation représentée à la figure 1 comporte deux rouleaux cylindriques 3, 11, de même diamètre, montés à rotation autour d'axes parallèles disposés dans un même plan horizontal. La surface de chacun de ces rouleaux gaufreurs est pourvue d'éléments 4 en relief, rapportés ou obtenus directement par gravure du métal. Ces éléments sont taillés selon le motif dont on désire voir l'empreinte reproduite sur les nappes d'ouate de cellulose. Il peut s'agir d'un motif géométrique simple, d'une fleur, etc... La surface, tournée vers l'extérieur, de ces éléments en relief est inscrite dans une surface cylindrique concentrique aux rouleaux.

Les rouleaux sont séparés par un intervalle de pincement 12 ménagé entre ces deux surfaces cylindriques. Ils sont entraînés en rotation, en synchronisme, mais dans des sens opposés, par des moyens appropriés tels qu'engrenages ou courroies. Dans cet intervalle de pincement, les éléments en relief se correspondent et enserrent entre leurs plats les nappes d'ouate de cellulose qui y sont introduites. Chacun des rouleaux gaufreurs 3, 11 coopère avec un rouleau 2, 10 en caoutchouc souple avec lequel il ménage une zone de pincement où les éléments en relief 4 des rouleaux métalliques pénètrent dans la matière souple des contre-rouleaux. En conséquence, la nappe fibreuse subit une déformation plastique permanente en passant à travers cet intervalle 5, et le motif représenté sur les rouleaux métalliques vient se reproduire en relief sur la nappe.

L'association des deux nappes en une feuille à structure stratifiée est réalisée de la façon suivante : une nappe 1 en ouate de cellulose, par exemple, dont le grammage est compris entre 14 g/m² et 60 g/m² est déroulée depuis une bobine d'alimentation, non représentée, et entraînée dans le sens de la flèche. Elle s'enroule autour du rouleau en caoutchouc 2 pour être pincée en 5 entre ce rouleau et le rouleau gaufreur métallique 3 dont les éléments en relief 4 pénètrent dans la nappe et la déforment plastiquement. Des vérins presseurs, non représentés, appuient le rouleau en caoutchouc 2 sur le rouleau 3 avec une force suffisante pour réaliser le gaufrage de la nappe qui, à la sortie de la zone de pincement 5, vient épouser le contour du cylindre gaufreur avec ses éléments en relief 4. En progressant avec le rouleau 3, la nappe parvient à un applicateur de colle qui est du type flexographique. Un rouleau tramé, en acier, 6 prélève la substance adhésive dans une réserve 7, et la reporte sur la surface lisse d'un rouleau de transfert en caoutchouc 8 qui est en appui, et roule, sur le rouleau 3. Une pellicule de substance adhésive est déposée de la sorte à la surface de la nappe 1, sur les parties gaufrées.

De la même façon que pour la nappe 1, une nappe d'ouate de cellulose 9 est déroulée depuis une bobine d'alimentation, non représentée, et entraînée autour d'un rouleau en caoutchouc 10.

La nappe est gaufrée par passage entre ce rouleau presseur 10 et le rouleau gaufreur métallique 11 ; elle vient s'appliquer ensuite contre la surface de ce dernier dont elle épouse le contour. Les deux nappes 1 et 9 convergent, dans leur déplacement, vers l'intervalle de pincement 12 ménagé entre les rouleaux 3 et 11. Les rouleaux tournent dans des sens de rotation opposés à vitesses égales de manière à rouler l'un sur l'autre sans glissement. L'angle de référence des rouleaux a été réglé de façon à faire venir en vis-à-vis les éléments en relief de chaque rouleau respectif, quand ils passent dans l'intervalle de pincement. Ainsi les deux nappes se rejoignent dans cet intervalle, et sont réunies par leurs parties en relief. Elles adhèrent l'une à l'autre par la pellicule d'adhésif appliquée sur la nappe 1. Des vérins, non représentés, exercent une pression suffisante sur les rouleaux pour donner à cette liaison la résistance souhaitée. Les plats des éléments en relief sont suffisamment larges pour permettre une zone de contact étendue. On taille en pratique les éléments en relief de manière que leurs plats présentent une largeur comprise entre 0,5 et 1 mm.

La feuille composite est ensuite dirigée vers un système d'embobinage connu en soi , pour une transformation ultérieure en essuie-tout, papier hygiénique ou autres applications.

Dans une installation où les cylindres gaufreurs sont dans un même plan horizontal, le rouleau de transfert en caoutchouc 8 du dispositif applicateur de colle est disposé dans la partie inférieure de l'installation, le plus près possible de l'intervalle de pincement, afin de réduire autant que possible le temps pendant lequel l'adhésif diffuse à travers la nappe de fibres, et éviter un encrassement rapide des cylindres.

En effet, en réglant le dispositif enducteur de la colle, on peut déposer sur le papier une quantité juste suffisante pour assurer la liaison entre les plis. La plage de réglage s'étendra par exemple de 0,85 g/m² à 0,010 g/m² pour une solution adhésive à au moins 40% de matières sèches. Ce taux a pour objet de limiter le taux d'humidité du produit fini et éviter sa déformation. Par ailleurs, la viscosité ne doit pas dépasser 1000 mPa's (centipoise) pour des raisons de machinabilité à grande vitesse. Mais il faut tenir compte également du temps de migration de la colle à travers le papier. Dans le cas d'une vitesse de rotation minimale des cylindres gaufreurs, il est nécessaire que la zone dans laquelle on dépose la colle ne soit pas trop éloignée du point de mariage pour éviter que celle-ci n'ait le temps de traverser la feuille, avec pour conséquence un risque d'encrassement des cylindres au moment du liage des plis par la pression très élevée régnant dans la zone de pincement. Ce dépt de colle sur les cylindres n'est pas souhaitable car il augmente l'adhérence des plis au métal et est susceptible d'entraîner un enroulement de la nappe autour des cylindres ce qui, outre les pannes de machine, provoque leur rapide détérioration. Ce dépt indésirable entraîne également un endommagement des cylindres en caoutchouc qui réduit leur durée de vie du fait des fréquentes rectifications rendues nécessaires. Dans le cas d'un faible dépôt de substance adhésive, le risque d'encrassement des cylindres est moins grand puisque le volume absorbé est inférieur à la capacité d'absorption du papier. Mais il faut alors éviter de laisser la surface de liaison s'appauvrir en colle.

Ainsi, dans le cadre d'un dispositif de gaufrage constitué de deux cylindres de diamètre de 50 cm tournant à une vitesse linéaire pouvant varier entre 200 mètres/minute et 500 mètres/minute, ledit dispositif étant utilisé pour gaufrer et lier des nappes d'ouate de cellulose de grammage compris entre 14 g/m² et 25 g/m² et de préférence entre 14 g/m² et 18 g/m², la colle, à au moins 40% de matière sèche étant déposée à raison d'une quantité comprise entre 0,010 g/m² et 0,85 g/m², il est apparu que la position optimale du rouleau applicateur se situait dans le quart de circonférence en amont de l'intervalle de pincement.

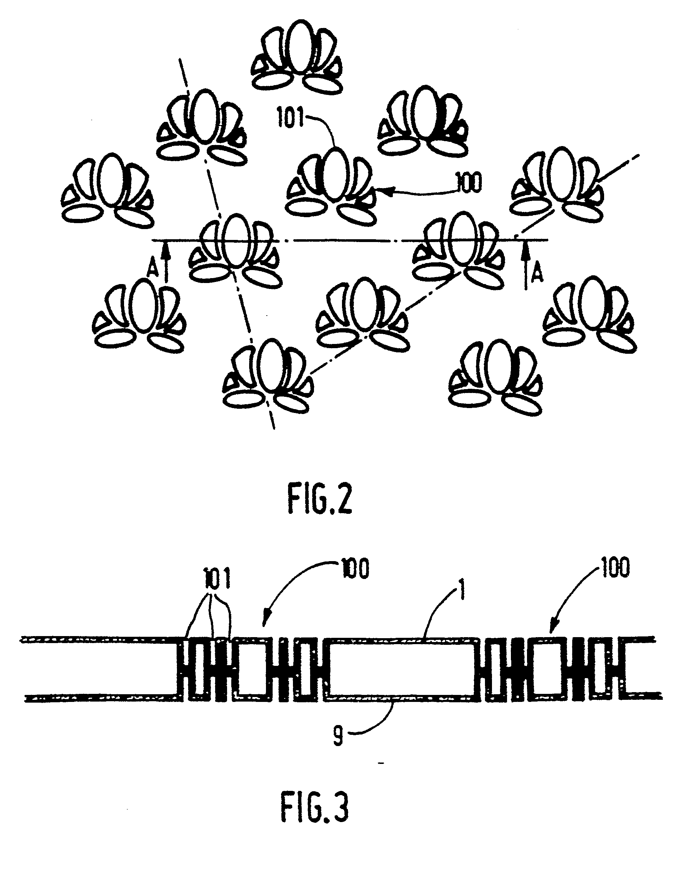

Sur les figures 2 et 3 est rapporté un exemple de réalisation de feuille stratifiée conforme à l'invention. Elle comporte deux nappes de fibres cellulosiques 1 et 9. Les parties déformées par le gaufrage forment, vues en plan, des traits 101 continus combinés de façon à dessiner le contour d'un motif 100, une fleur stylisée dans le cas présent. La hauteur de ces parties 101 qui a été exagérée à la figure 3 est suffisante pour augmenter l'épaisseur des plis jusqu'à 100%.

L'épaisseur des traits correspond à la largeur des éléments en relief 4 de la figure 1. Afin de permettre un contact linéaire et une tenue des plis suffisante, cette épaisseur doit être de l'ordre de 0,5 à 1 mm, de préférence de 0,7 à 0,9 mm.

Le motif dont les contours sont dessinés par les zones déformées est inscrit dans un polygone de surface comprise entre 2 et 4 cm². Les zones déformées couvrent elles mêmes 40 % à 60 % du motif. Ce motif est répété indéfiniment et uniformément selon deux directions inclinées par rapport au sens machine de la feuille. Cette disposition offre l'avantage d'éviter la superposition des motifs lors de la transformation ultérieure de la feuille e n rouleaux d'essuie-tout ou de papier hygiénique notamment. Quel que soit le mode de répartition le nombre de tels motifs par unité de surface est compris entre 800 et 1600 par m² de manière, d'une part, à laisser un espacement suffisant entre eux qui ne doit pas être inférieur à 5 mm, d'autre part, à maintenir la densité de surface gaufrée à une valeur comprise entre 5 % et 20 % de la surface totale de la feuille. En effet un gaufrage couvrant moins de 5 % de la feuille ne permet pas d'obtenir une épaisseur suffisante, à l'opposé, quand les reliefs recouvrent plus de 20 % de la feuille ils entraînent une rigidité excessive qui nuit à la douceur.

Exemple :

Une feuille stratifiée a été réalisée à partir de deux plis d'ouate de cellulose de 15,5 g/m² chacun, crêpés à sec avec 21 crêtes au cm. Les plis ont été calandrés de manière à écrêter le crêpage et à en calibrer l'épaisseur, celle-ci étant de 0,85 mm pour 10 plis superposés. Avant formation de la feuille, la force de rupture sèche pour 2 plis de 15 mm de large était de 320 CN dans le sens machine et de 120 CN dans le sens travers. L'allongement sens machine était de 15,5%. On a choisi un motif de fleur couvrant une surface unitaire de 250 mm² et répété à raison de 1300 motifs au m² de sorte que la surface totale gaufrée représente 15,5 % de la surface de la feuille. Le gaufrage a permis d'augmenter l'épaisseur qui est passée à 1,3 mm pour 5 feuilles superposées. La colle était une solution aqueuse à 45 % de matière sèche d'une résine thermodurcissable de type couramment utilisé dans cette application. Le dispositif enducteur de colle de la figure 1 a été réglé pour assurer un dépôt sur les surfaces en relief de 0,015 g/m². On a mesuré la force de rupture d'une éprouvette de la feuille de 15 mm. Elle était de 250 CN dans le sens machine et de 100 CN dans le sens travers.

A titre de comparaison on a réalisé une deuxième feuille avec le même motif que précédemment mais comportant en outre un gaufrage par points entre les motifs à raison de 5,5 points par cm², chacun d'eux ayant 0,7 mm de diamètre. On note une chute importante de la résistance de la feuille, la force de rupture pour un échantillon de 15 mm de large n'est plus que de 225 CN dans le sens machine et de 85 dans le sens travers. Cette résistance est encore diminuée quand on passe à 9,5 points par cm², la force de rupture de la feuille n'est alors plus que de 120 CN dans le sens machine et de 55 dans le sens travers.

Revendications

1. Feuille stratifiée, absorbante, composée d'au moins deux plis gaufrés constitués essentiellement de fibres cellulosiques, de grammage compris entre 14 et 25 g/m², liés entre eux au moins partiellement par des éléments faisant saillie par rapport au plan desdits plis vers l'extérieur de la feuille, ladite feuille, comportant un sens machine, étant caractérisée en ce que les éléments en saillie (101) sont disposés essentiellement selon des traits continus ou des combinaisons de traits continus, de largeur comprise entre 0,5 et 1 mm, de façon à dessiner le contour de motifs linéaires (100) répartis uniformément le long de deux directions inclinées par rapport au sens machine, chacun des motifs couvrant une surface comprise entre 2 et 4 cm². 40 à 60 % de ladite surface étant gaufrée, et le nombre de motifs étant choisi de façon que la surface totale gaufrée couvre de 5 à 20 % de la surface de la feuille.

2. Feuille stratifiée selon la revendication 1, caractérisée en ce que le nombre de motifs est compris entre 800 et 1600 par mètre carré de feuille.

3. Feuille stratifiée selon l'une des revendications précédentes, caractérisée en ce que la largeur des éléments en saillie est comprise entre 0,7 et 0,9 mm.

4. Procédé pour fabriquer une feuille stratifiée absorbante selon l'une des revendications 4 à 5, à partir d'ouate de cellulose de grammage compris entre 14 et 25 g/m², consistant à gaufrer chacun des plis (1,9) au moyen de cylindres métalliques (3,11) comportant des éléments en relief (4), à déposer de la colle comportant au moins 40% de matière sèche sur les parties déformées de l'un des plis, et à associer lesdits plis par passage dans l'intervalle de pincement (12) ménagé entre les cylindres caractérisé en ce que :
   - les cylindres sont entraînés en rotation à une vitesse correspondant à une vitesse linéaire comprise entre 200 et 500 mètres/minute.
   - la colle est déposée à raison d'une quantité comprise entre 0,010 et 0,85 g/m² en une zone située en amont de l'intervalle de pincement à au plus un quart de la circonférence des cylindres.

5. Procédé selon la revendication 6 caractérisé en ce que le grammage est compris entre 14 et 18 g/m².

Claims

1. A stratified absorbent sheet comprising at least two embossed plies consisting essentially of cellulose fibres, of a weight between 14 and 25 g/m², joined together at least partly by means of protuberances projecting from the plane of the said plies towards the outside of the sheet, the said sheet, comprising a machine direction, being characterised in that the protuberances (101) are arranged essentially along continuous lines or combinations of continuous lines of width between 0.5 and 1 mm in such a way as to delineate the perimeter of linear patterns (100) distributed uniformly along two directions inclined with respect to the machine direction, each of the pattern units covering a surface area between 2 and 4 cm², 40 to 60% of the said surface area being embossed, and the number of pattern units being chosen in such a way that the totalled embossed surface area covers from 5 to 20% of the surface area of the sheet:

2. A stratified sheet according to claim 1, characterised in that number of pattern units lies between 800 and 1600 per square metre of sheet.

3. A stratified sheet according to one of the foregoing claims, characterised in that the width of the protuberances lies between 0.7 and 0.9 mm.

4. A process for manufacturing an absorbent stratified sheet according to one of claims 4 to 5 from cellulose wadding having a weight between 14 and 25 g/m² consisting of embossing each of the plies (1, 9) by means of metal rollers (3,11) comprising protruding members (4), depositing adhesive containing at least 40% of dry matter on the deformed parts of one of the plies and joining the said plies together by passing them through the nip (12) between the rollers, characterised in that:
   - the rollers are driven to rotate at a speed corresponding to a linear speed between 200 and 500 metres/minute
   - the adhesive is deposited in an amount lying between 0.010 and 0.85 g/m² in a zone upstream of the nip at a distance of no more than one quarter of the circumference of the rollers.

5. A process according to claim 6 characterised in that the weight lies between 14 and 18 g/m².

**Ansprüche**

1. Mehrschichtiges, absorbierendes Blatt, zusammengesetzt aus zumindest zwei geprägten Lagen gebildet im wesentlichen aus Cellulosefasern, von einem Flächengewicht enthalten zwischen 14 und 25 g/m², die untereinander zumindest teilweise durch Elemente verbunden sind, die bezüglich der Ebene der besagten Lagen zum Äußeren des Blattes vorspringen, wobei das Blatt, welches einen Maschinensinn aufweist, dadurch gekennzeichnet ist, daß die vorspringenden Elemente (101) im wesentlichen entlang fortlaufenden Linien oder Kombinationen fortlaufender Linien angeordnet sind, von einer Breite, die zwischen 0,5 und 1 mm enthalten ist, dergestalt, daß der Umriß linearer Motive (100) gezeichnet ist, die gleichmäßig entlang von zwei geneigten Richtungen bezüglich des Maschinensinnes verteilt sind, wobei jedes der Motive eine Oberfläche entdeckt, die zwischen 2 und 4 cm² enthalten ist, 40 bis 60 % der besagten Oberfläche geprägt sind, und die Anzahl der Motive derart gewählt ist, daß die gesamte geprägte Oberfläche 5 bis 20 % der Oberfläche des Blattes bedeckt.

2. Mehrschichtiges Blatt gemäß Anspruch 1, dadurch gekennzeichnet, daß die Anzahl Motive zwischen 800 und 1600 pro m² des Blattes enthalten ist.

3. Mehrschichtiges Blatt gemäß einem der vorstehenden Ansprüche, dadurch gekennzeichnet, daß die Breite der vorspringenden Elemente zwischen 0,7 und 0,9 mm enthalten ist.

4. Verfahren zur Herstellung eines mehrschichtigen, absorbierenden Blattes gemäß einem der Ansprüche 4 bis 5, auf der Grundlage von Zellstoffwatte mit einem Flächengewicht enthalten zwischen 14 und 25 g/m², beständig für das Prägen jeder der Lagen (1, 9) mittels metallischer Zylinder (3, 11) die Reliefelemente (4) aufweisen, Klebstoff, der mindestens 40 % Trockenmasse aufweist, auf den deformierten Teilen einer der Schichten abzulagern, und die Lagen miteinander zu verbinden, durch Durchgang in dem Quetschungsintervall (12), welches zwischen den Zylindern ausgespart ist, dadurch gekennzeichnet, daß:
   - die Zylinder in Drehbewegung mit einer Geschwindigkeit angetrieben sind, die einer linearen Geschwindigkeit enthalten zwischen 200 und 500 m/Minute entspricht,
   - der Klebstoff einer Menge enthalten zwischen 0,010 und 0,85 g/m² abgelagert wird, in einer Zone, die stromaufwärts des Quetschungsintervalls angeordnet ist, auf höchstens einem Viertel des Umfanges des Zylinders.

5. Verfahren gemäß Anspruch 6, dadurch gekennzeichnet, daß das Flächengewicht zwischen 14 und 18 g/m² enthalten ist.

FIG.1

FIG.2

FIG.3